# EUROPÄISCHE PATENTANMELDUNG

(11) **EP 4 660 087 A2**
(43) Veröffentlichungstag der Anmeldung: **10.12.2025**
(21) Anmeldenummer: 25174531.1
(22) Anmeldetag: 06.05.2025
(51) Int. Cl.: B65B 17/02, B65B 21/06, B65B 21/24, B65B 35/44, B65B 35/54, B65B 59/00, B65G 47/08, B65B 7/28, B65B 27/04

(54) **VERPACKUNGSSYSTEM MIT MINDESTENS EINER WEICHE UND VERFAHREN ZUM VERPACKEN VON ARTIKELN**

(30) Priorität: 15.05.2024 DE 102024113654
(71) Anmelder: Krones Aktiengesellschaft, 93073 Neutraubling (DE)
(72) Erfinder: KREIS, Marcus, 93073 Neutraubling (DE); LUBER, Johann, 93073 Neutraubling (DE); SPINDLER, Herbert, 93073 Neutraubling (DE)
(74) Vertreter: Benninger, Johannes

(57) **Zusammenfassung**

Es ist ein Verpackungssystem (1) mit mindestens einer Weiche (5, 7) zum Verteilen von Artikeln (2) offenbart. Das Verpackungssystem (1) umfasst eine Horizontalfördereinrichtung (15) zur Fortbewegung der über die mindestens eine Weiche (5, 7) verteilten Artikel (2) und mindestens einen zum Aufbringen von Verpackungsmaterial auf Artikel (2) ausgebildeten Industrieroboter (14, 14').

Die mindestens eine Weiche (5, 7) ist zur Entgegennahme von Artikeln (2), die hierbei in parallel zueinander orientierten Bahnen (B1, B1') mit einer Anzahl der Bahnen n von n≥2 bewegt werden, und zur Verteilung der Artikel (2) auf Bahnen mit einer Anzahl von Bahnen m ausgebildet. Es gilt hierbei: m > n.

## Beschreibung

Die vorliegende Erfindung betrifft ein Verpackungssystem mit mindestens einer Weiche und ein Verfahren zum Verpacken von Artikeln.

Um Verpackungsmittel auf Artikel aufzubringen, werden die Artikel auf einer Horizontalfördereinrichtung befördert, bis sie zu einem Arbeitsbereich eines Industrieroboters gelangen. Während der Fortbewegung auf der Horizontalfördereinrichtung kann der Industrieroboter sodann ein Verpackungsmittel auf die Artikel aufbringen. Bei dem Verpackungsmittel kann es sich beispielsweise um eine Banderole oder um einen Clip handeln, der Artikel aneinanderhält und zu einem Gebinde zusammenfasst.

Ein solches Verpackungssystem ist aus der DE 10 2019 113 180 A1 bekannt. Das Verpackungssystem umfasst eine Manipulationseinrichtung, die zum Erfassen einer Artikelgruppe und zum Verbringen der Artikelgruppe in eine Zielposition ausgebildet ist. Zudem umfasst die Manipulationseinrichtung mindestens ein Werkzeug zum Festlegen eines Verpackungszuschnittes an den Artikeln der Artikelgruppe.

Bei Verpackungssystemen gemäß der DE 10 2019 113 180 A1 kann die Leistung des Systems gesteigert werden, indem mehrere Manipulationseinrichtung hintereinander angeordnet werden. Solche Verpackungssysteme sind kostspielig und führen zu einem umfangreichen Aufbau der Anlage, da mehrere hintereinander angeordnete Manipulationseinrichtung einen hohen Platzbedarf benötigen. Daher wären Verpackungssysteme wünschenswert, mit denen sich die Leistung bzw. der Durchsatz auf einfache Art und Weise weiter steigern lässt.

Eine Aufgabe der Erfindung besteht somit darin, eine Möglichkeit bereitzustellen, mit welcher der Durchsatz bzw. die Leistung bei der Verpackung von Artikeln auf einfache Art und Weise gesteigert werden kann. Weiter ist es eine Aufgabe der Erfindung, eine entsprechende Möglichkeit bereitzustellen, die einen geringen Platzbedarf zur Steigerung der Leistung bzw. des Durchsatzes benötigt.

Die obigen Aufgaben werden mit den Gegenständen gelöst, welche die Merkmale in den unabhängigen Ansprüchen umfassen. Weitere vorteilhafte Ausführungsformen werden durch die abhängigen Ansprüche beschrieben.

Die Erfindung betrifft ein Verpackungssystem mit mindestens einer Weiche zum Verteilen von Artikeln. Bei den Artikeln kann es sich um Getränkebehälter und insbesondere um Getränkeflaschen und/oder um Getränkedosen handeln.

Das Verpackungssystem umfasst eine Horizontalfördereinrichtung zur Fortbewegung der über die mindestens eine Weiche verteilten Artikel und mindestens einen zum Aufbringen von Verpackungsmaterial auf Artikel ausgebildeten Industrieroboter, dessen Arbeitsbereich sich zumindest anteilig über die Horizontalfördereinrichtung erstreckt. Bei dem mindestens einen Industrieroboter kann es sich beispielsweise um mindestens einen Deltakinematik-Roboter handeln. Auch kann es sein, dass es sich bei dem mindestens einen Industrieroboter um mindestens einen Mehrachsroboter bzw. um mindestens einen Knickarmroboter handelt.

Es kann sein, dass der mindestens eine Industrieroboter zum Aufbringen von Verpackungsmaterial auf Artikel ausgebildet ist, bei welchem Verpackungsmaterial es sich um Banderolen bzw. um Umreifungen handelt. Auch kann es sein, dass der mindestens eine Industrieroboter zum Aufbringen von Verpackungsmaterial auf Artikel ausgebildet ist, bei welchem Verpackungsmaterial es sich um Verpackungszuschnitte handelt, die jeweils mehrere Öffnungen ausbilden, welche mehreren Öffnungen mit mehreren Artikeln korrespondieren, so dass ein jeweiliger Artikel in eine jeweilige Öffnung des jeweiligen Verpackungszuschnittes einsteckbar ist. Im Bereich einer jeweiligen Öffnung kann ein solcher Verpackungszuschnitt jeweils mehrere zum Halten eines jeweiligen Artikels ausgebildete Haltzungen umfassen. Weiter ist denkbar, dass der mindestens eine Industrieroboter zum Aufbringen von Verpackungsmaterial auf Artikel ausgebildet ist, bei welchem Verpackungsmaterial es sich um Verpackungszuschnitte handelt, wobei
- ein jeweiliger Verpackungszuschnitt jeweils mehrere Öffnungen ausbildet, welche mehreren Öffnungen mit mehreren Artikeln korrespondieren, so ein jeweiliger Artikel in eine jeweilige Öffnung des jeweiligen Verpackungszuschnittes einsteckbar ist und welcher jeweilige Verpackungszuschnitt
- zudem eine Banderole ausbildet oder zudem eine Banderole umfasst.

Es ist vorgesehen, dass die mindestens eine Weiche zur Entgegennahme von Artikeln, die hierbei in parallel zueinander orientierten Bahnen mit einer Anzahl der Bahnen n von n≥2 und zur Verteilung der Artikel auf Bahnen mit einer Anzahl von Bahnen m ausgebildet ist, wobei gilt m > n.

Es kann hierbei gelten:
- n < 10 und m < 25 oder
- n < 5 und m < 15 oder
- n < 3 und m < 10 oder
- n = 2 und m = 4.

In diversen Ausführungsformen kann gelten: m = n x 2. Bei solchen Ausführungsformen kann zudem gelten: n < 10, insbesondere n < 5 und vorzugsweise n < 3 und insbesondere n = 2.

Da die Artikel oder ggf. auch Artikelgruppen somit vor einem Aufbringen von Verpackungsmaterial über den mindestens einen Industrieroboter verteilt werden, befinden sich die Artikel oder Artikelgruppen bei einem Aufbringen von Verpackungsmaterialien in einer Anordnung, bei der die Artikel oder ggf. Artikelgruppen innerhalb vergleichsweise kurzer Zeit mit Verpackungsmaterialien versehen werden können. Aus diesem Grunde besitzt das Verpackungssystem gegenüber bekannten Verpackungssystemen eine vergleichsweise hohe Leistung bei der Verpackung von Artikeln oder Artikelgruppen, ohne dass ein Umfangreicher Aufbau des Verpackungssystems hierfür notwendig ist.

Das Verpackungssystem kann einen Zulauf mit mindestens einem Transportband umfassen, über welches Transportband der mindestens einen Weiche Artikel oder Artikelgruppen zuführbar sind. Wie nachfolgend noch beschrieben, kann es sein, dass das Verpackungssystem eine erste Weiche und eine zweite Weiche umfasst. Bei solchen Ausführungsformen kann es sein, dass der Zulauf mindestens ein Transportband umfasst, über welches mindestens eine Transportband der ersten Weiche Artikel oder Artikelgruppen einer ersten Bahn der parallel zueinander orientierten Bahnen zuführbar sind, deren Anzahl n ist und über welches mindestens eine Transportband zudem der zweiten Weiche Artikel oder Artikelgruppen einer zweiten Bahn der parallel zueinander orientierten Bahnen zuführbar sind, deren Anzahl n ist.

Die mindestens eine Weiche bzw. die erste Weiche und/oder die zweite Weiche können sich abschnittsweise über den Zulauf bzw. zumindest abschnittsweise über das mindestens eine Transportband des Zulaufs erstrecken, so dass Artikel oder Artikelgruppen bereits im Bereich des Zulaufs durch die mindestens eine Weiche bzw. durch die erste Weiche und/oder durch die zweite Weiche entgegengenommen werden.

Auch ist es denkbar, dass das Verpackungssystem eine Füllmaschine zum Befüllen der durch Getränkebehälter ausgebildeten Artikel mit einer Flüssigkeit, insbesondere mit einem flüssigen Getränk, umfasst. Die Füllmaschine kann der mindestens einen Weiche in einer Strömungsrichtung der Artikel bzw. in einer Strömungsrichtung der Getränkebehälter vorgeordnet sein. Damit soll klargestellt sein, dass eine solche optionale Fülllmaschine stromaufwärts zu der genannten mindestens einen Weiche angeordnet sein kann.

Alternativ oder ergänzend hierzu kann es sein, dass das Verpackungssystem eine dem mindestens einen zum Aufbringen von Verpackungsmaterial auf Artikel ausgebildeten Industrieroboter und ggf. auch dem nachfolgend noch beschriebenen Verteiler in Strömungsrichtung nachgeordnete Arbeitsstation umfasst, über die thermoplastisches Verpackungsmaterial auf Artikel oder auf Artikelgruppen aufgebracht werden kann.

Sofern es sich bei einem solchen thermoplastischen Verpackungsmaterial um schrumpfbares Folienmaterial handelt, das unter Wärmeeinwirkung zum Schrumpfen neigt, kann es insbesondere sinnvoll sein, der genannten Arbeitsstation stromabwärts einen Schrumpftunnel folgen zu lassen. Somit kann bei solchen Ausführungsformen das Verpackungssystem einen Schrumpftunnel zum Aufschrumpfen des auf die Artikel bzw. auf die Artikelgruppen aufgebrachten thermoplastischen Verpackungsmaterials mittels Wärmeeinwirkung umfassen.

Alternativ oder ergänzend hierzu kann es außerdem sein, dass das Verpackungssystem eine Maschine zum Aufbringen von Klebeverbindungen auf Artikel bzw. auf Artikelgruppen umfasst, über welche Klebeverbindungen mehrere Artikel bzw. mehrere Artikelgruppen als Gebinde aneinander festgesetzt werden können.

Die genannten Verpackungsvarianten sind nicht einschränkend oder abschließend zu verstehen, so dass wahlweise auch Stretchwickler oder andere Verpackungsmodule eingesetzt werden können.

Alternativ oder ergänzend hierzu kann es sein, dass das Verpackungssystem eine dem mindestens einen zum Aufbringen von Verpackungsmaterial auf Artikel ausgebildeten Industrieroboter und ggf. auch dem nachfolgend noch beschriebenen Verteiler in Strömungsrichtung nachgeordnete Gruppierstation umfasst, über die mehrere Artikel, mehrere Artikelgruppen oder mehrere Gebinde in eine relative Anordnung zueinander überführbar sind, welche relative Anordnung auf eine aus den mehreren Artikeln, den mehreren Artikelgruppen oder den mehreren Gebinden zu bildende palettierfähige Lage abgestimmt ist.

Eine solche Gruppierstation kann beispielsweise mindestens einen Deltakinematik-Roboter umfassen, der die Artikel, die Artikelgruppen oder die mehreren Gebinde in die relative Anordnung überführt, die auf eine aus den mehreren Artikeln, den mehreren Artikelgruppen oder den mehreren Gebinden zu bildende palettierfähige Lage abgestimmt ist.

Es ist zudem vorstellbar, dass das Verpackungssystem eine Arbeitsvorrichtung umfasst, welche die Artikel, die Artikelgruppen oder die Gebinde der bereits gebildeten relativen Anordnung zusammenschiebt und hierdurch eine vollständige palettierfähige Lage ausbildet.

Auch kann es sein, dass das Verpackungssystem eine Palettierstation umfasst, die zum gestapelten Verbringen palettierfähiger Lagen an eine zugeordnete Palette ausgebildet ist. Bei solchen Ausführungsformen kann eine Zuführeinrichtung vorgesehen sein, welche der Palettierstation teil- oder vollautonom Paletten zum gestapelten Anordnen mehrerer palettierfähiger Lagen bereitstellt.

Bewährt haben sich in der Praxis Ausführungsformen, bei denen für die Anzahl n der parallel zueinander orientierten Bahnen und für die Anzahl m der Bahnen gilt: n =2 und m = 4.

Es kann sein, dass das Verpackungssystem eine Steuerungseinrichtung umfasst, die mit der mindestens einen Weiche in Verbindung steht. Die Steuerungseinrichtung kann zu einer solchen Ansteuerung der mindestens einen Weiche ausgebildet sein, dass die mindestens eine Weiche Artikel oder Artikelgruppen jeder der parallel zueinander orientierten Bahnen, deren Anzahl n ist, auf genau zwei Bahnen verteilt.

Das Verpackungssystem kann wenigstens einen Einteiler zum Ausbilden von Artikelgruppen umfassen, die zum Aufbringen von Verpackungsmaterial über den mindestens einen Industrieroboter vorbestimmt sind. Hierbei kann es sein, dass der wenigstens eine Einteiler der mindestens einen Weiche in einer Strömungsrichtung der Artikel vorgeordnet ist, so dass Artikelgruppen bzw. bereits ausgebildete Artikelgruppen über die mindestens eine Weiche entgegengenommen werden.

Auch kann es sein, dass der wenigstens eine Einteiler der mindestens einen Weiche in einer Strömungsrichtung der Artikel nachgeordnet ist, so dass mittels des wenigstens einen Einteilers Artikelgruppen aus Artikeln ausgebildet werden können, welche Artikel über die mindestens eine Weiche bereits auf Bahnen mit der Anzahl m verteilt worden sind.

Die mindestens eine Weiche kann mindestens eine schwenkbare Klappe umfassen oder durch mindestens eine schwenkbare Klappe ausgebildet sein. Solche Ausführungsformen haben sich bewährt, da solche Ausführungsformen auf einfache Art und Weise eine Verteilung von Artikeln oder Artikelgruppen ermöglichen. Eine Schwenkachse der mindestens einen schwenkbaren Klappe kann in bevorzugten Ausführungsformen eine zumindest näherungsweise vertikale Orientierung besitzen.

Weiter kann das Verpackungssystem eine erste Weiche und eine zweite Weiche umfassen, wobei die erste Weiche zur Entgegennahme und zum Verteilen von Artikeln oder Artikelgruppen einer ersten Bahn der parallel zueinander orientierten Bahnen ausgebildet ist, deren Anzahl n ist.

Weiter kann die zweite Weiche zur Entgegennahme und zum Verteilen von Artikeln oder Artikelgruppen einer weiteren ersten Bahn der parallel zueinander orientierten Bahnen ausgebildet sein, deren Anzahl n ist.

Das Verpackungssystem kann eine Steuerungseinrichtung umfassen, über welche die erste Weiche und die zweite Weiche derart ansteuerbar sind, dass Artikel oder Artikelgruppen über die erste Weiche und über die zweite Weiche jeweils auf mehrere unterschiedliche Bahnen derart verteilt werden, dass eine über den Zeitverlauf für eine jeweilige erste Bahn vorgesehene Anzahl an Artikeln oder Artikelgruppen größer ist als eine über den Zeitverlauf für eine jeweilige zweite Bahn vorgesehene Anzahl an Artikeln oder Artikelgruppen.

Bewährt haben sich insbesondere Ausführungsformen, bei denen das Verpackungssystem eine Steuerungseinrichtung umfasst, welche zu einer solchen Ansteuerung der ersten Weiche und der zweiten Weiche ausgebildet ist, dass eine Sequenz von jeweils drei aufeinanderfolgenden und über die jeweilige Weiche entgegengenommenen Artikeln oder Artikelgruppen über die jeweilige Weiche auf mehrere unterschiedliche Bahnen derart verteilt wird, dass von der Sequenz aus jeweils drei aufeinanderfolgenden Artikeln oder jeweils drei aufeinanderfolgenden Artikelgruppen jeweils zwei Artikel oder jeweils zwei Artikelgruppen einer ersten Bahn zugeordnet werden und jeweils ein Artikel oder jeweils eine Artikelgruppe einer jeweiligen zweiten Bahn zugeordnet wird.

Weiter kann die Steuerungseinrichtung zu einer solchen Ansteuerung der ersten Weiche und der zweiten Weiche ausgebildet sein, dass die erste Weiche gegenüber der zweiten Weiche den jeweiligen einen Artikel oder die jeweilige eine Artikelgruppe zeitversetzt auf die zweite Bahn überführt.

Denkbar ist auch, dass die Steuerungseinrichtung zu einer solchen Ansteuerung der ersten Weiche und der zweiten Weiche ausgebildet ist, dass der jeweilige über die erste Weiche der zweiten Bahn zugeführte Artikel oder die jeweilige über die erste Weiche der zweiten Bahn zugeführte Artikelgruppe senkrecht zu ihrer Strömungsrichtung mit einem über die zweite Weiche der zweiten Bahn zugeführten Artikel oder mit einer über die zweite Weiche der zweiten Bahn zugeführten Artikelgruppe fluchtet.

Weiter kann es sein, dass auf den mindestens einen Industrieroboter in Strömungsrichtung eine Führung folgt, welche derart positioniert und ausgebildet ist, dass Artikel oder Artikelgruppen, welche über die erste Weiche der zweiten Bahn zugeführt wurden, mit Artikeln oder Artikelgruppen, die über die zweite Weiche der zweiten Bahn zugeführt wurden, auf eine gemeinsame dritte Bahn zusammengeführt werden.

Das Verpackungssystem kann wenigstens einen ersten Industrieroboter und wenigstens einen zweiten Industrieroboter umfassen, die jeweils zum Aufbringen von Verpackungsmaterial auf Artikel oder auf Artikelgruppen ausgebildet sind und auf gegenüberliegenden Seiten der Horizontalfördereinrichtung angeordnet sind. Insbesondere kann es sein, dass das Verpackungssystem auf den gegenüberliegenden Seiten der Horizontalfördereinrichtung jeweils mindestens zwei Industrieroboter umfasst, die jeweils zum Aufbringen von Verpackungsmaterial auf Artikel oder auf Artikelgruppen ausgebildet sind.

Zudem kann das Verpackungssystem eine Steuerungseinrichtung umfassen, welche den wenigstens einen ersten Industrieroboter und den wenigstens einen zweiten Industrieroboter zum Aufbringen von Verpackungsmaterialien auf unterschiedliche Artikel bzw. auf unterschiedliche Artikelgruppen aufeinander abgestimmt ansteuert. Der wenigstens eine erste Industrieroboter und der wenigstens eine zweite Industrieroboter können sich an einer solchen Position befinden, in welcher der wenigstens eine erste Industrieroboter mit dem wenigstens einen zweiten Industrieroboter senkrecht zur Strömungsrichtung der Artikel bzw. senkrecht zur Strömungsrichtung der Artikelgruppen fluchtet.

Die Erfindung betrifft zudem eine Verwendung eines Verpackungssystem gemäß einer Ausführungsform der vorhergehenden Beschreibung zum Verpacken von Artikeln, bei denen es sich um Getränkebehälter handelt.

Weiter betrifft die Erfindung ein Verfahren zum Verpacken von Artikeln, bei dem Artikel in parallelen Bahnen mit einer Anzahl an Bahnen n mindestens einer Weiche zugeführt und über die mindestens eine Weiche auf Bahnen mit einer Anzahl m, die größer als die Anzahl n ausgebildet ist, verteilt werden und über eine Horizontalfördereinrichtung sodann fortbewegt werden. Mindestens ein Industrieroboter bringt Verpackungsmaterial auf Artikel auf, während sich die Artikel auf der Horizontalfördereinrichtung befinden.

Das vorhergehend bereits beschriebene Verpackungssystem kann ggf. zur Durchführung des erfindungsgemäßen Verfahrens sowie der nachfolgend beschriebenen Ausführungsformen des erfindungsgemäßen Verfahrens ausgebildet sein. Weiter können das erfindungsgemäße Verfahren und die nachfolgend beschriebenen Ausführungsformen des erfindungsgemäßen Verfahrens mittels des erfindungsgemäßen Verpackungssystems bzw. mittels der Ausführungsformen des erfindungsgemäßen Verpackungssystems durchgeführt werden.

Merkmale, welche vorhergehend bereits zu diversen Ausführungsformen des Verpackungssystems erwähnt wurden, können auch bei dem erfindungsgemäßen Verfahren vorgesehen sein und werden nicht mehrfach erwähnt. Ebenso können die nachfolgend zu diversen Ausführungsformen des erfindungsgemäßen Verfahrens beschriebenen Merkmale bei den vorhergehend beschriebenen Ausführungsformen des Verpackungssystems vorgesehen sein, ohne erneut erwähnt zu werden.

Es kann sein, dass vor Zuführung der Artikel an die mindestens eine Weiche oder nach Verteilen der Artikel über die mindestens eine Weiche aufeinanderfolgende Artikel über wenigstens einen Einteiler voneinander beabstandet werden, wodurch jeweils mehrere Artikel umfassende Artikelgruppen gebildet werden. Der mindestens eine Industrieroboter kann auf die Artikelgruppen Verpackungsmaterial aufbringen, so dass die Artikel einer jeweiligen Artikelgruppe über das Verpackungsmaterial zu einem Gebinde zusammengefasst sind. Aufeinanderfolgende Artikelgruppen sind hierbei in Strömungsrichtung voneinander beabstandet.

Weiter hat es sich bewährt, wenn eine erste Weiche und eine zweite Weiche vorgesehen sind. Die erste Weiche kann Artikel oder Artikelgruppen von einer ersten Bahn der parallel zueinander orientierten Bahnen entgegennehmen, deren Anzahl n ist und diese entgegengenommenen Artikel oder Artikelgruppen verteilen, indem die erste Weiche Artikel oder Artikelgruppen auf der ersten Bahn belässt und weitere Artikel oder Artikelgruppen auf eine zweite Bahn führt.

Zudem kann es hierbei sein, dass die zweite Weiche Artikel oder Artikelgruppen von einer weiteren ersten Bahn der parallel zueinander orientierten Bahnen entgegennimmt, deren Anzahl n ist, wobei die zweite Weiche diese entgegengenommenen Artikel oder Artikelgruppen verteilt, indem die zweite weiche Artikel oder Artikelgruppen auf der weiteren ersten Bahn belässt und weitere Artikel oder Artikelgruppen auf eine weitere zweite Bahn führt.

Auch kann es sein, dass die erste Weiche und die zweite Weiche der jeweiligen ersten Bahn eine größere Anzahl an Artikeln oder Artikelgruppen über den Zeitverlauf zuführen als sie der jeweiligen zweiten Bahn zuführen.

Denkbar ist, dass über die erste Weiche und über die zweite Weiche eine Sequenz von jeweils drei aufeinanderfolgenden und über die jeweilige Weiche entgegengenommenen Artikeln oder Artikelgruppen über die jeweilige Weiche auf mehrere unterschiedliche Bahnen verteilt wird. Hierbei kann es sein, dass von der Sequenz aus jeweils drei aufeinanderfolgenden Artikeln oder drei aufeinanderfolgenden Artikelgruppen jeweils zwei Artikel oder jeweils zwei Artikelgruppen auf der jeweiligen ersten Bahn belassen werden und jeweils ein Artikel oder jeweils eine Artikelgruppe derselben Sequenz einer jeweiligen zweiten Bahn zugeführt wird.

Bei solchen Ausführungsformen kann es sein, dass zunächst die erste Weiche den jeweiligen einen Artikel oder die jeweilige eine Artikelgruppe der jeweiligen Sequenz der jeweiligen zweiten Bahn zuführt und hierauf folgend die zweite Weiche den jeweiligen einen Artikel oder die jeweilige eine Artikelgruppe der weiteren zweiten Bahn zuführt. Somit kann es sein, dass die erste Weiche und die zweite Weiche den jeweiligen einen Artikel zeitversetzt der jeweiligen zweiten Bahn zuführen.

Die erste Weiche und die zweite Weiche können Artikel oder Artikelgruppen derart verteilen, dass die über die erste Weiche verteilten Artikel oder Artikelgruppen mit den über die zweite Weiche verteilten Artikeln oder Artikelgruppen senkrecht zur Strömungsrichtung fluchten. Insbesondere können die erste Wiche und die zweite Weiche Artikel oder Artikelgruppen derart verteilen, dass ein über die erste Weiche verteilter Artikel oder eine über die erste Weiche verteilte Artikelgruppe mit genau einem über die zweite Weiche verteilten Artikel oder mit genau einer über die zweite Weiche verteilten Artikelgruppe senkrecht zur Strömungsrichtung fluchtet.

Auch ist denkbar, dass die den weiteren zweiten Bahnen zugeführten Artikel oder die den weiteren zweiten Bahnen zugeführten Artikelgruppen nach Aufbringen des Verpackungsmaterials zusammengeführt und entlang einer dritten Bahn gemeinsam weiterbewegt werden.

Um den Durchsatz weiter zu erhöhen, haben sich Ausführungsformen bewährt, bei denen sich auf gegenüberliegenden Seiten der Horizontalfördereinrichtung wenigstens ein erster Industrieroboter und wenigstens ein zweiter Industrieroboter befinden, die jeweils Verpackungsmaterial auf Artikel oder auf Artikelgruppen aufbringen. Der wenigstens eine erste Industrieroboter und der wenigstens eine zweite Industrieroboter können sich hierbei an einer solchen Position befinden, bei denen der wenigstens eine erste Industrieroboter senkrecht zur Strömungsrichtung der Artikel mit dem wenigstens einen zweiten Industrieroboter fluchtet.

Es kann sein, dass der mindestens eine Industrieroboter Verpackungsmaterial auf Artikel oder auf Artikelgruppen aufbringt, während sich die Artikel oder Artikelgruppen auf der Horizontalförderreinrichtung befinden, ohne die Artikel oder Artikelgruppen hierbei anzuheben und/oder ohne die Artikel oder Artikelgruppen auf der Horizontalfördereinrichtung zu versetzen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsform des erfindungsgemäßen Verpackungssystems und verdeutlicht Schritte, wie sie in diversen Ausführungsformen des erfindungsgemäßen Verfahrens vorgesehen sein können.
Fig. 2 zeigt eine schematische Teilansicht der Ausführungsform eines Verpackungssystems nach Fig. 1 und verdeutlicht weitere Schritte, wie sie in diversen Ausführungsformen des erfindungsgemäßen Verfahrens vorgesehen sein können.
Fig. 3 zeigt einen weiteren Abschnitt der Ausführungsform eines erfindungsgemäßen Verpackungssystems nach Fig. 1 unter Verdeutlichung weiterer Aspekte.
Fig. 4 zeigt eine schematische Perspektivansicht des Abschnittes des Verpackungssystems nach Fig. 3 und verdeutlicht weitere Schritte, wie sie in diversen Ausführungsformen des erfindungsgemäßen Verfahrens vorgesehen sein können.
Fig. 5 zeigt im Flussdiagramm Schritte, wie sie einzeln oder gemäß der in Fig. 5 dargestellten Kombination und Reihenfolge in diversen Ausführungsformen eines erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Fig. erforderlich sind. Die dargestellten Ausführungsformen stellen lediglich Beispiele dar, wie die Erfindung ausgestaltet sein kann und stellen keine abschließende Begrenzung dar.

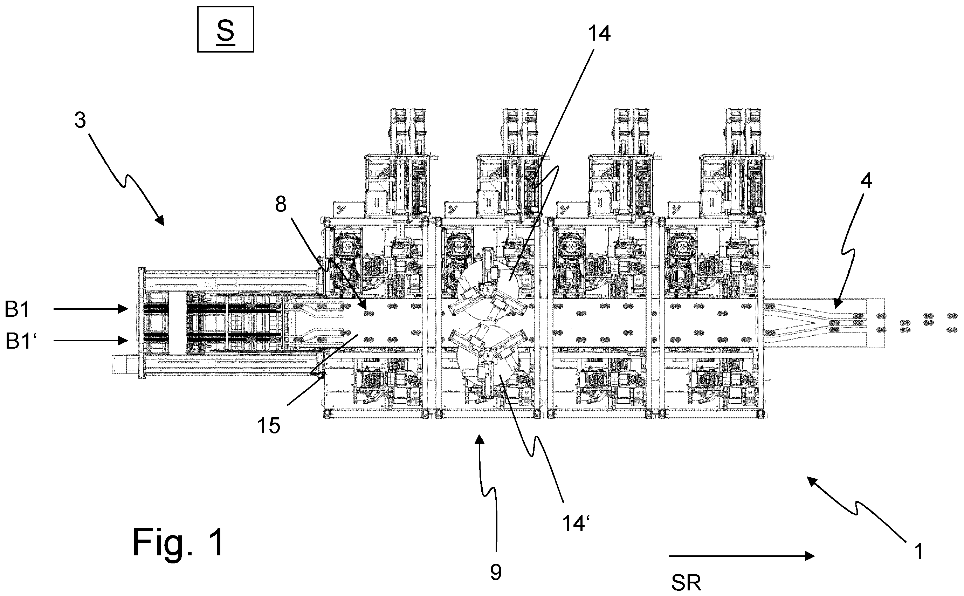

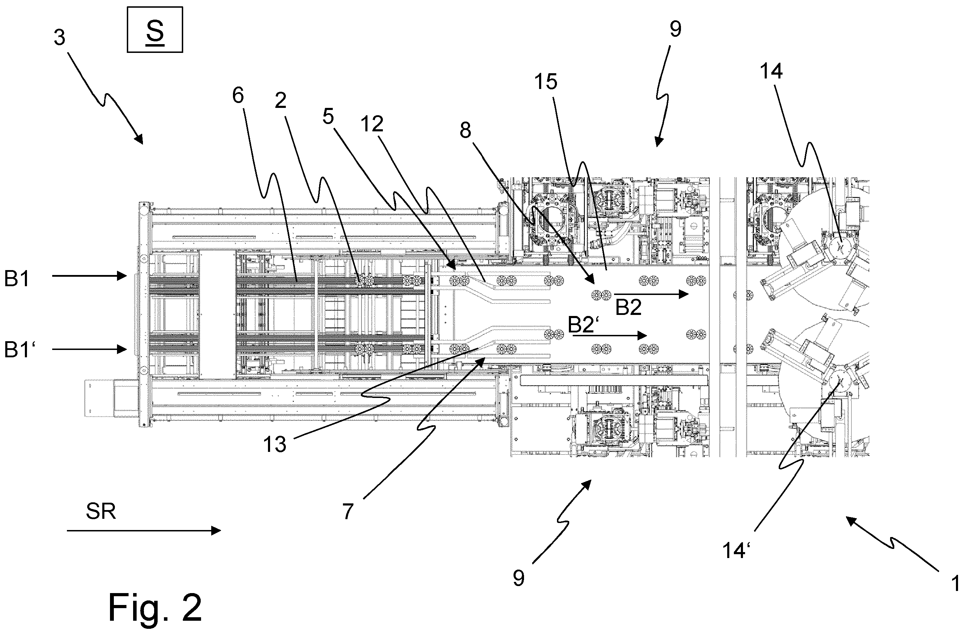

Die in Fig. 1 dargestellte Ausführungsform eines erfindungsgemäßen Verpackungssystems 1 umfasst einen Zulauf 3, über den bereits gebildete Artikelgruppen 8 mit jeweils zwei Artikeln 2 in zwei parallelen Bahnen B1 und B1' in Richtung einer ersten Weiche 5 und in Richtung einer zweiten Weiche 7 bewegt werden. Wie es nachfolgend zu der Teilansicht nach Fig. 2 noch beschrieben ist, werden die Artikelgruppen 8 über die erste Weiche 5 und über die zweite Weiche 7 verteilt und sodann über eine Horizontalfördereinrichtung 15 in Strömungsrichtung SR weiterbewegt. Die Horizontalfördereinrichtung 15 besitzt ein umlaufend angetriebenes Transportband, auf dem die Artikelgruppen 8 während der weiteren Bewegung aufstehen.

In der Praxis umfasst ein solches Verpackungssystem 1 einen Einteiler, der dem Zulauf 3 in Strömungsrichtung SR vorgeordnet ist. Zum Einteiler gelangen die Artikel 2 als Artikelstrom, bei dem aufeinanderfolgende Artikel 2 miteinander in Oberflächenkontakt stehen. Der Einteiler bildet die Artikelgruppen 8, indem er Artikel 2 des jeweiligen Artikelstroms kurzzeitig zurückhält. Hierdurch können jeweils zwei Artikel 2, die eine jeweilige Artikelgruppe 8 bilden, den nachfolgenden Artikeln 2 vorauseilen und bilden sodann eine Artikelgruppe 8 aus, wie dies in Fig. 1 zu erkennen ist. Sämtliche nachfolgenden Artikelgruppen 8 des jeweiligen Artikelstroms, die fortlaufend über den Einteiler gebildet werden, fluchten mit den vorauseilenden Artikelgruppen 8 in Strömungsrichtung SR.

Ein solcher Einteiler hat aus zwei Artikelströmen auf die beschriebene Art und Weise Artikelgruppen 8 gebildet und in den parallelen Bahnen B1 und B1' an den Zulauf 3 weitergeführt.

Wie es bereits erwähnt wurde, folgt auf den Zulauf 3 eine Horizontalfördereinrichtung 15. Auf gegenüberliegenden Seiten der Horizontalfördereinrichtung 15 sind mehrere Industrieroboter 14 und 14' angeordnet, wobei sich im Ausführungsbeispiel nach Fig. 1 auf einer jeweiligen Seite der Horizontalfördereinrichtung 15 genau vier solche Industrieroboter 14 bzw. 14' befinden. Bei den Industrierobotern 14 bzw. 14' handelt es sich um Deltakinematik-Roboter.

Die Anzahl an Industrierobotern 14 und 14' sowie die Ausbildung als Deltakinematik-Roboter ist lediglich beispielhaft zu verstehen, so dass die Industrieroboter 14 bzw. 14' in weiteren Ausführungsbeispielen auch in größerer oder kleinerer Anzahl als Bestandteil eines Verpackungssystems 1 vorgesehen sein können oder beispielsweise auch jeweils durch einen Mehrachsroboter oder einen weiteren Manipulator ausgebildet sein können. Aus Gründen der Übersichtlichkeit sind in Fig. 1 lediglich zwei der Deltakinematik-Roboter dargestellt, wobei im Ausführungsbeispiel nach Fig. 1 acht Deltakinematik-Roboter vorgesehen sind.

Die Industrieroboter 14 und 14' sind jeweils zum Aufbringen von Verpackungsmaterial auf Artikelgruppen 8 ausgebildet. Hierdurch kann aus den mehreren Artikeln 2 einer jeweiligen Artikelgruppe 8 ein Gebinde gebildet werden. Wie es Fig. 1 erkennen lässt, sind die Industrieroboter 14 bzw. 14' Bestandteil eines jeweiligen Moduls 9. Die Module 9 umfassen weitere Komponenten zur Bereitstellung und zur Vorbereitung von Verpackungsmaterialien. Die Verpackungsmaterialien, welche über die Industrieroboter 14 bzw. 14' auf Artikelgruppen 8 aufgebracht werden, können beispielsweise als Banderole ausgebildet sein.

Ein jeweiliges Modul 9 kann bei diesen Ausführungsformen ein Magazin aufweisen, in welchem Magazin eine Vielzahl an Banderolen gespeichert sind und aus welchem Magazin der jeweilige Industrieroboter 14 bzw. 14' eine Banderole zum Aufbringen auf eine jeweilige Artikelgruppe 8 entnehmen kann. Auch kann ein jeweiliges Modul 9 weitere Komponenten besitzen, mit denen die Banderole 9 zum Aufbringen auf eine jeweilige Artikelgruppe 8 bereits vorbereitet wird.

Zudem kann es in diversen Ausführungsformen sein, dass die Industrieroboter 14 und 14' zum Aufbringen von Verpackungsmaterialien auf Artikelgruppen 8 ausgebildet sind, bei welchen Verpackungsmaterialien es sich um Verpackungszuschnitte handelt. Solche Verpackungszuschnitte besitzen für jeden Artikel 2 eine korrespondierende Öffnung, in welche der jeweilige Artikel 2 eingesteckt wird. Im Bereich einer jeweiligen Öffnung bildet der Verpackungszuschnitt mehrere Haltezungen aus, die den jeweiligen Artikel 2 im Bereich eines Verschlusses untergreifen und somit den jeweiligen Artikel am Verpackungszuschnitt festsetzen.

Damit solche Verpackungszuschnitte sicher auf Artikel 2 aufgesteckt werden können, umfassen die Module 9 jeweils eine Matrize, auf die der jeweilige Industrieroboter 14 bzw. 14' einen Verpackungszuschnitt aufsteckt, so dass die Haltezungen bereits gebogen und in eine Orientierung gebracht werden, in welcher der Verpackungszuschnitt problemfrei auf eine Artikelgruppe 8 aufgesteckt werden kann. Die Industrieroboter 14 bzw. 14' entnehmen somit bei solchen Ausführungsformen jeweils einen Verpackungszuschnitt aus einem als Bestandteil des jeweiligen Moduls 9 ausgebildeten Magazin, stecken den entnommenen Verpackungszuschnitt sodann auf eine Matrize auf und führen dann den Verpackungszuschnitt hierauf über eine jeweilige Artikelgruppe 8, woraufhin der Verpackungszuschnitt über den jeweiligen Industrieroboter 14 bzw. 14' auf die jeweilige Artikelgruppe 8 aufgesteckt wird.

Die Erfindung und Ausbildungen gemäß dem Ausführungsbeispiel nach Fig. 1 sind jedoch nicht auf solche Ausführungsformen beschränkt, so dass die Industrieroboter 14 und 14' auch zum Aufbringen weiterer Verpackungsmaterialien auf Artikel 2 oder auf Artikelgruppen 8 ausgebildet sein können.

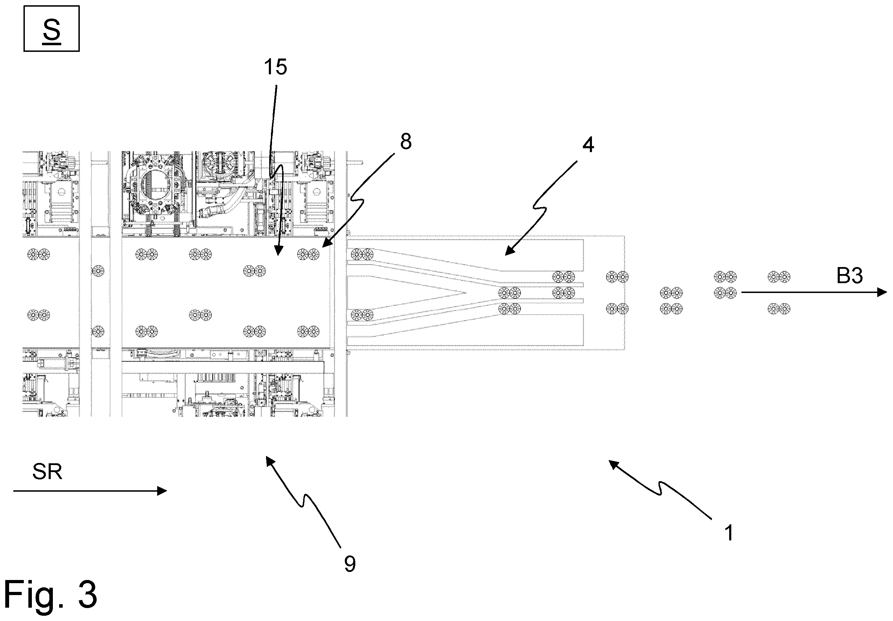

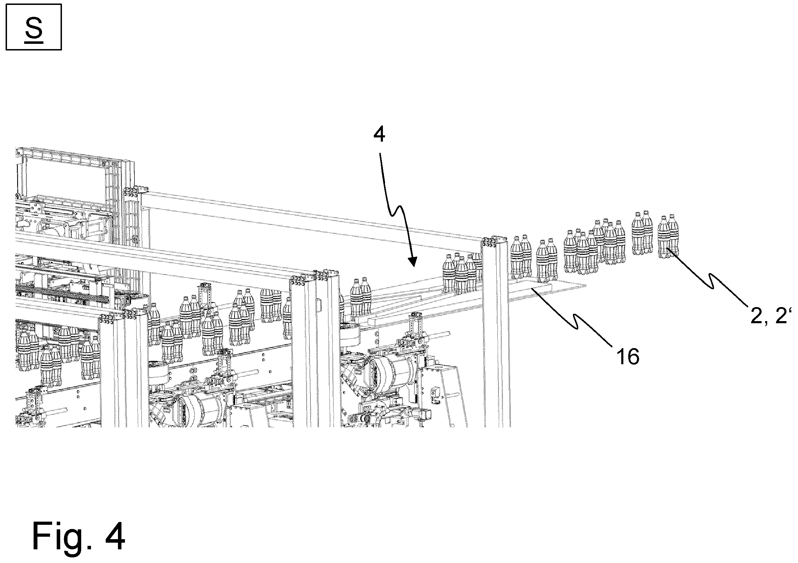

Die Arbeitsbereiche der Industrieroboter 14 und 14' verlassen die Artikelgruppen 8 als Gebinde und werden über die Horizontalfördereinrichtung 15 weiter in Strömungsrichtung SR bewegt, bis die Artikelgruppen 8 zu einer Führung 4 gelangen, die im Detail nochmals in den Figuren 3 und 4 dargestellt wird. Wie es Fig. 1 und Fig. 2 erkennen lassen, werden die Artikelgruppen 8 über die Horizontalfördereinrichtung 15 in genau vier parallelen Bahnen B1, B1', B2 und B2' in Strömungsrichtung SR bewegt. Die Führung 4 nimmt die Artikelgruppen 8 bzw. die Gebinde aus den genau vier parallelen Bahnen B1, B1', B2 und B2' entgegen und führt die Artikelgruppen 8 der beiden inneren Bahnen zusammen, so dass diese Artikelgruppen 8 die Führung 4 als einbahniger Strom entlang einer dritten Bahn B3 (vgl. Fig. 3) verlassen. Artikelgruppen 8 bzw. Gebinde, die entlang der beiden äußeren ersten Bahnen B1 und B1' transportiert sind, werden nicht zu einem gemeinsamen einbahnigen Strom zusammengeführt, jedoch wird der relative Abstand von Artikelgruppen 8 bzw. von Gebinden der beiden ersten Bahnen B1 und B1' über die Führung 4 zueinander verkleinert, so dass sie sich im Bereich der Führung 4 einander nähern bzw. so dass sie im Bereich der Führung 4 aufeinander zubewegt werden.

Die Artikelgruppen 8 bzw. die Gebinde verlassen die Führung 4 in drei parallelen Bahnen. Solche Ausführungsformen haben sich insbesondere bewährt, wenn mehrere 2er-Gebinde nachfolgend zu einem 6er-Gebinde zusammengefasst werden sollen.

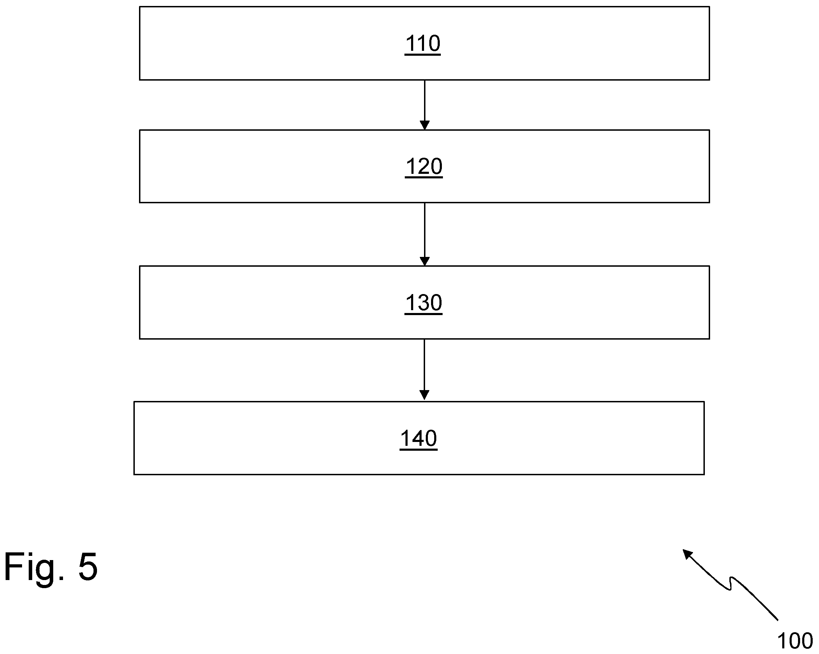

Die Fig. 2 zeigt eine schematische Teilansicht der Ausführungsform des Verpackungssystems 1 nach Fig. 1 und verdeutlicht weitere Schritte, wie sie in diversen Ausführungsformen des erfindungsgemäßen Verfahrens 100 (vgl. Fig. 5) vorgesehen sein können. Die in Fig. 2 dargestellte Teilansicht bildet den Zulauf 3, die Horizontalfördereinrichtung 15, die beiden Weichen 5 und 7 sowie die bereits in Fig. 1 beschriebenen Industrieroboter 14 und 14' in vergrößerter Darstellung ab. Wie es Fig. 2 zeigt, verfügt der Zulauf 3 über Transportbänder 6, auf denen Artikelgruppen 8 aufstehen und in Strömungsrichtung SR zu den Weichen 5 und 7 transportiert werden.

Jede der Weichen 5 und 7 verfügt über mehrere Führungsgeländer oder Gassenbleche, die Artikelgruppen 8 während des Übertritts vom Zulauf 3 an die Horizontalfördereinrichtung 15 seitlich stützen und verhindern, dass Artikelgruppen 8 bei einem Übertritt vom Zulauf 3 an die Horizontalfördereinrichtung 15 ungewollt kippen. Fig. 2 verdeutlicht hierbei auch, dass die Führungsgeländer oder Gassenbleche der ersten Weiche 5 und der zweiten Weiche 7 jeweils in den Zulauf 3 hineinreichen, so dass sich Artikelgruppen 8 bereits zwischen benachbarten Führungsgeländern bzw. zwischen benachbarten Gassenblechen befinden, bevor die Artikelgruppen 8 vom Zulauf 3 auf die Horizontalfördereinrichtung 15 übertreten. Insbesondere verdeutlicht Fig. 2 hierbei, dass sich Artikelgruppen 8 bereits zwischen den Gassenblechen oder Führungsgeländern der Weichen 5 und 7 befinden, wenn die Artikelgruppen 8 noch über das jeweilige Transportband 6 des Zulaufs 3 fortbewegt werden.

Zudem verdeutlicht die Fig. 2, dass die Führungsgeländer oder Gassenblech auch in einem solchen Bereich positioniert sind, bei welchem die Artikelgruppen 8 bereits auf die Horizontalfördereinrichtung 15 übergetreten sind. Die Artikelgruppen 8 werden demnach bei einem beginnenden Transport über die Horizontalfördereinrichtung 15 noch von den Führungsgeländern bzw. den Gassenblechen der Weichen 5 und 7 gestützt und geführt. Hierdurch kann mit hoher Sicherheit gewährleistet werden, dass die Artikelgruppen 8 die Arbeitsbereiche der Industrieroboter an einer vorgegebenen Position erreichen und während des beginnenden Transportes über die Horizontalfördereinrichtung 15 nicht kippen.

Der vorherige bereits erwähnte Einteiler bildet die Artikelgruppen 8 derart aus, dass in Strömungsrichtung SR jeweils unmittelbar aufeinanderfolgende Artikelgruppen 8 einer jeweiligen Bahn B1 bzw. B1' einen im Wesentlichen identischen Abstand zueinander besitzen, der in der Praxis auch als Teilungsabstand bezeichnet wird. Eine Fördergeschwindigkeit für die Artikelgruppen 8 über den Zulauf 3 und eine Transportgeschwindigkeit der Artikelgruppen 8 über die Horizontalfördereinrichtung 15 sind vorliegend im Wesentlichen identisch ausgebildet. Die Ansteuerung des Zulaufs 3 und die Ansteuerung der Horizontalfördereinrichtung 15 erfolgt über die Steuerungseinrichtung S, welcher hierzu mit dem Zulauf 3 und der Horizontalfördereinrichtung 15 in Verbindung steht. Auch die Bewegung der Industrieroboter 14 und 14' wird über die Steuerungseinrichtung S vorgegeben.

Sofern es für das Aufbringen von Verpackungsmaterialien über die Industrieroboter 14 und 14' erforderlich sein sollte, können die Fördergeschwindigkeit des Zulaufs 3 und die Transportgeschwindigkeit der Horizontalfördereinrichtung 15 auch unterschiedlich ausgebildet werden, wodurch der Teilungsabstand zwischen aufeinanderfolgenden Artikelgruppen 8 bei Übertritt vom Zulauf 3 auf die Horizontalfördereinrichtung 15 wahlweise vergrößert oder verkleinert werden kann.

Weiter werden die Artikelgruppen 8 über den Einteiler an einer solchen Position und mit einem solchen Teilungsabstand ausgebildet, dass die im Bereich des Zulaufs 3 in der ersten Bahn B1 bewegten Artikelgruppen 8 und die im Bereich des Zulaufs 3 in der weiteren ersten Bahn B1' bewegten Artikelgruppen 8 paarweise sowie senkrecht zur Strömungsrichtung SR miteinander fluchten. Hierdurch erreicht eine in der ersten Bahn B1 bewegte Artikelgruppe 8 die erste Weiche 5 genau dann, wenn eine in der weiteren ersten Bahn B1' bewegte Artikelgruppe 8 die zweite Weiche 7 erreicht. Weiter wird den Weichen 5 und 7 durch eine solche Einteilung der Artikelgruppen 8 über den Zeitverlauf eine gleiche Anzahl an Artikelgruppen 8 zugeführt.

Die in der oberen Bahn bzw. ersten Bahn B1 bewegten Artikelgruppen 8 werden somit der oberen auf Verweis mit Bezugsziffer 5 dargestellten ersten Weiche zugeführt. Hingegen werden die in der unteren Bahn bzw. weiteren ersten Bahn B1' bewegten Artikelgruppen 8 der unteren und auf Verweis mit Bezugsziffer 7 dargestellten Weiche zugeführt. Vorliegend werden den Weichen 5 und 7 somit Artikelgruppen 8 in parallelen Bahnen B1 und B1' zugeführt, wobei für die Anzahl n an Bahnen gilt: n = 2.

Die Weichen 5 und 7 stehen ebenso mit der Steuerungseinrichtung S in Verbindung und werden über die Steuerungseinrichtung S betätigt, um die entgegengenommenen Artikelgruppen 8 zu verteilen und hierbei entweder auf der ersten Bahn B1 bzw. B1' zu belassen oder an eine zweite Bahn B2 bzw. B2' zu überführen. Wie es Fig. 2 zeigt, sind die zweiten Bahnen B2 und B2' gegenüber den ersten Bahnen B1 und B1' in Richtung einer Mitte der Horizontalfördereinrichtung 15 versetzt. Die ersten Bahnen B1 und B1' bilden daher zwei äußere Bahnen auf der Horizontalfördereinrichtung 15 aus, wohingegen die zweiten Bahnen B2 und B2' zwei innere Bahnen auf der Horizontalfördereinrichtung 15 bilden.

Zu einer Verteilung der Artikelgruppen 8 auf die ersten Bahnen B1 und B1' sowie auf die zweiten Bahnen B2 und B2' umfassen die Weichen 5 und 7 jeweils eine schwenkbare Klappe 12 bzw. 13, die auf Veranlassung der Steuerungseinrichtung S zum Verteilen der Artikelgruppen 8 um eine im Wesentlichen vertikale orientierte Achse zwischen zwei vorgegebenen Lagepositionen hin und her bewegt wird und hierbei eine jeweilige Artikelgruppe 8 auf der jeweiligen ersten Bahn B1 bzw. B1' belässt oder einer zweiten Bahn B2 bzw. B2' zuführt. Jede der Weichen 5 und 7 umfasst somit auch einen Aktuator zur Bewegung der jeweiligen Klappe 12 bzw. 13 in die jeweilige Lageposition.

Die Fig. 2 verdeutlicht zudem, dass über die erste Weiche 5 und über die zweite Weiche 7 jeweils bei einer Sequenz, die sich aus drei aufeinanderfolgenden Artikelgruppen 8 zusammensetzt, lediglich eine einzige Artikelgruppe 8 auf die zweite Bahn B2 bzw. B2' verschoben wird. Die beiden weiteren Artikelgruppen 8 der jeweiligen Sequenz verbleiben auf der ersten Bahn B1 bzw. B1' und werden nicht auf eine der zweiten Bahnen B2 bzw. B2' verschoben.

Auch lässt Fig. 2 erkennen, dass die Weichen 5 und 7 über die Steuerungseinrichtung S derart betätigt werden, dass das Verschieben einer Artikelgruppe 8 über die erste Weiche 5 auf die zweite Bahn B2 und das Verschieben einer Artikelgruppe 8 über die zweite Weiche 7 auf die zweite Bahn B2' zeitversetzt erfolgen. So wird über die erste Weiche 5 jede erste ankommende Artikelgruppe 8 der jeweiligen Sequenz auf die zweite Bahn B2 verschoben, wobei über die zweite Weiche jede zweite ankommende Artikelgruppe der jeweiligen Sequenz auf die weitere zweite Bahn B2' verschoben wird. Vorteilhafterweise können hierdurch die auf den zweiten Bahnen B2 und B2' befindlichen Artikelgruppen 8 über die Führung 4 (vgl. Figuren 3 und 4) auf eine dritte Bahn B3 zusammengeschoben werden.

Durch eine solche Verteilung auf mehrere Bahnen B1, B1', B2 und B2' und die nachfolgende Beförderung der Artikelgruppen 8 in den Bahnen B1, B1' und B2 und B2' können über die Industrieroboter 14 und 14' Verpackungsmaterialien mit hoher Geschwindigkeit auf die Artikelgruppen 8 aufgebracht werden. Es kann hierbei beispielsweise sein, dass ein Industrieroboter 14 bzw. 14' einen Applikationskopf umfasst, der zum gemeinsamen Entgegennehmen mehrerer Verpackungsmaterialien ausgebildet ist und diese gemeinsam entgegengenommenen mehreren Verpackungsmaterialien zeitgleich oder zumindest näherungsweise zeitgleich auf mehrere unterschiedliche Artikelgruppen 8 aufbringen kann, die hierbei in unterschiedlichen Bahnen B1, B1', B2 bzw. B2' bewegt werden.

Die bereits beschriebene und über die Weichen 5 und 7 durch Verteilung der Artikelgruppen 8 auf die Bahnen B1, B1', B2 und B2' ausgebildete definierte Beförderung über die Horizontalfördereinrichtung 15 ermöglicht dem Applikationskopf das Aufbringen mehrerer Verpackungsmaterialien auf unterschiedliche Artikelgruppen 8 in etwa zu einem identischen Zeitpunkt.

Wie es bei dem Ausführungsbeispiel nach Fig. 2 vorgesehen ist, befinden sich auf gegenüberliegenden Seiten der Horizontalfördereinrichtung 15 jeweils mehrere Industrieroboter 14 bzw. 14'. Um Verpackungsmaterialien auf sämtliche Artikelgruppen 8 aufzubringen, werden die Industrieroboter 14 und 14' über die Steuerungseinrichtung S aufeinander abgestimmt angesteuert. Insbesondere werden hierbei die jeweilige Bewegung des jeweiligen Industrieroboters 14 bzw. 14' und der jeweilige Zeitpunkt, an welchem der jeweilige Industrieroboter 14 bzw. 14' ein Verpackungsmaterial auf eine Artikelgruppe 8 aufbringt, über die Steuerungseinrichtung S vorgegeben.

Da die Industrieroboter 14 und 14' ihren jeweiligen Applikationskopf zum Aufbringen von Verpackungsmaterialien jeweils über die Horizontalfördereinrichtung 15 bewegen müssen, muss die Ansteuerung der Industrieroboter 14 und 14' derart erfolgen, dass eine Kollision der Applikationsköpfe ausgeschlossen werden kann. Bei der beschriebenen und über die Verteilung der Artikelgruppen 8 via die Weichen 5 und 7 ausgebildeten definierten Beförderung von Artikelgruppen 8 entlang der Horizontalfördereinrichtung 15 können sich mehrere Applikationsköpfe über der Horizontalfördereinrichtung 15 befinden, um jeweils Verpackungsmaterialien auf Artikelgruppen 8 aufzubringen. Es können sich sogar mehrere Applikationsköpfe solcher Industrieroboter 14 und 14' zeitgleich über der Horizontalfördereinrichtung 15 befinden, welche Industrieroboter 14 und 14' senkrecht zur Strömungsrichtung fluchtend auf gegenüberliegenden Seiten der Horizontalfördereinrichtung 15 positioniert sind.

Mit dem Verpackungssystem 1 können somit Artikelgruppen 8 mit hohem Durchsatz verpackt werden. Da die Verteilung der Artikelgruppen 8 über die Weichen 5 und 7 erfolgt, die zur Verteilung lediglich eine Klappe 12 bzw. 13 benötigen, lässt sich der Durchsatz auf einfache Art und Weise vergrößern. Zudem besteht sogar die Möglichkeit, dass Applikationsköpfe der beiden in Strömungsrichtung SR ersten und auf gegenüberliegenden Seiten angeordneten Industrieroboter 14 sich zeitgleich über der Horizontalfördereinrichtung 15 befinden und zeitgleich oder lediglich geringfügig zeitversetzt Verpackungsmaterialien auf Artikelgruppen 8 aufbringen.

Die Fig. 3 zeigt einen weiteren Abschnitt der Ausführungsform eines erfindungsgemäßen Verpackungssystems 1 nach Fig. 1 unter Verdeutlichung weiterer Aspekte. Insbesondere ist in Fig. 3 nochmals die bereits in Fig. 1 dargestellte Führung 4 zu erkennen, die in Strömungsrichtung SR auf die Module 9 folgt, welche Module 9 die Industrieroboter 14 und 14' sowie weitere Komponenten zur Vorbereitung und Bereitstellung von Verpackungsmaterialien umfassen.

Wie es Fig. 3 zeigt, werden die jeweiligen auf die zweiten Bahnen B2 und B2' mittels der Weichen 5 und 7 verschobenen Artikelgruppen 8 über die Führung 4 auf eine dritte Bahn B3 geschoben. Zudem werden die noch auf den ersten Bahnen B1 und B1' befindlichen Artikelgruppen 8 in Richtung zur dritten Bahn B3 verschoben.

Nachfolgend können jeweils drei Artikelgruppen 8 zu einem Sechsergebinde zusammengefasst werden, wozu auf jeweils drei Artikelgruppen 8 beispielsweise eine Umreifung aufgebracht wird und/oder wobei jeweils drei Artikelgruppen 8 über weiteres Verpackungsmaterial bzw. über eine Tertiärverpackung miteinander verbunden werden.

Die Fig. 4 zeigt eine schematische Perspektivansicht des Abschnittes des Verpackungssystems 1 nach Fig. 3 und verdeutlicht weitere Schritte, wie sie in diversen Ausführungsformen des erfindungsgemäßen Verfahrens 100 (vgl. Fig. 5) vorgesehen sein können. Fig. 4 zeigt die Artikel 2 einer jeweiligen Artikelgruppe 8, wobei es sich bei den Artikeln 2 um Getränkebehälter 2' handelt. Das Verpackungssystems 1 der Ausführungsform nach Fig. 4 eignet sich daher zum Verpacken von Artikeln 2, die als Getränkebehälter 2' ausgebildet sind. Die Führung 4 wird bei dem gezeigten Ausführungsbeispiel durch keilförmige Führungselemente 16 gebildet. Solche keilförmigen Führungselemente 16 sind austauschbar und können bedarfsweise durch weitere keilförmige Führungselemente 16 ersetzt werden, wenn zu einem späteren Zeitpunkt Getränkebehälter 2' mittels des Verpackungssystems 1 verpackt werden sollen, deren Querschnittsdurchmesser sich von den dargestellten Getränkebehältern 2' unterscheidet.

Die Fig. 5 zeigt im Flussdiagramm Schritte, wie sie einzeln oder gemäß der in Fig. 5 dargestellten Kombination und Reihenfolge in diversen Ausführungsformen eines erfindungsgemäßen Verfahrens 100 vorgesehen sein können. Im Schritt 110 werden Artikelgruppen 8 in parallelen Bahnen bewegt und hierbei von zwei Weichen 5 und 7 entgegengenommen. Hierbei gilt für die Anzahl n der parallelen Bahnen, in welchen die Artikelgruppen 8 bewegt werden: n = 2.

Im Schritt 120 werden die entgegengenommenen Artikelgruppen 8 über die Weichen 5 und 7 auf mehrere Bahnen B1, B1', B2 und B2' verteilt und in den mehreren Bahnen B1, B1', B2, B2' auf einer Horizontalfördereinrichtung 15 fortbewegt, wodurch sie in den Arbeitsbereich mindestens eines Industrieroboters 14 bzw. 14' gelangen. Für die Anzahl m dieser Bahnen gilt: m = 4.

Im Schritt 130 bringt der mindestens eine Industrieroboter 14 bzw. 14' Verpackungsmaterialien auf die Artikelgruppen 8 auf, wobei es sich bei den Verpackungsmaterialien um Banderolen handelt oder wobei die Verpackungsmaterialien Banderolen umfassen. Die Artikelgruppen 8 werden hierbei weiterhin in den Bahnen B1, B1', B2 und B2' fortbewegt, für deren Anzahl m gilt: m = 4. Auch werden die relativen Positionen von Artikelgruppen 8, die sich auf der Horizontalfördereinrichtung 15 befinden, während des Aufbringens der Verpackungsmaterialien nicht verändert, so dass sämtliche Artikelgruppen 8 in ihrer jeweiligen Bahn B1, B1', B2 und B2' verbleiben.

Im Schritt 140 werden Artikelgruppen 8 aus zwei Bahnen B2 und B2' zu einer dritten Bahn B3 zusammengeführt, wozu eine Führung 4 vorgesehen ist. Der hierdurch gebildete Artikelstrom mit drei parallelen Reihen wird in Richtung einer Arbeitsstation bewegt, welche jeweils drei Artikelgruppen 8 über eine Tertiärverpackung zu einem Sechsergebinde zusammenfasst.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Verpackungssystem
- 2: Getränkebehälter
- 3: Zulauf
- 5: Weiche
- 6: Transportband
- 7: Weiche
- 8: Artikelgruppe
- 9: Modul
- 12: Klappe
- 13: Klappe
- 14: Industrieroboter
- 14': Industrieroboter
- 15: Horizontalfördereinrichtung
- 16: Führungselement

- 100: Verfahren
- 110: Verfahrensschritt, erster Verfahrensschritt
- 120: Verfahrensschritt, zweiter Verfahrensschritt
- 130: Verfahrensschritt, dritter Verfahrensschritt
- 140: Verfahrensschritt, vierter Verfahrensschritt

- B1: Bahn, erste Bahn
- B1': Bahn, weitere erste Bahn
- B2: Bahn, zweite Bahn
- B2': Bahn, weitere zweite Bahn
- B3: Bahn, dritte Bahn

- S: Steuerungseinrichtung
- SR: Strömungsrichtung

## Patentansprüche

1. Verpackungssystem (1), umfassend mindestens eine Weiche (5, 7) zum Verteilen von Artikeln (2), eine Horizontalfördereinrichtung (15) zur Fortbewegung der über die mindestens eine Weiche (5, 7) verteilten Artikel (2) und mindestens einen zum Aufbringen von Verpackungsmaterial auf Artikel (2) ausgebildeten Industrieroboter (14, 14'), dessen Arbeitsbereich sich zumindest anteilig über die Horizontalfördereinrichtung (15) erstreckt, wobei die mindestens eine Weiche (5, 7) zur Entgegennahme von Artikeln (2), die hierbei in parallel zueinander orientierten Bahnen (B1, B1') mit einer Anzahl der Bahnen n von n ≥ 2 und zur Verteilung der Artikel (2) auf Bahnen (B1, B1', B2, B2') mit einer Anzahl von Bahnen m ausgebildet ist, wobei gilt m > n.

2. Verpackungssystem (1) nach Anspruch 1, umfassend wenigstens einen Einteiler zum Ausbilden von Artikelgruppen (8), die zum Aufbringen von Verpackungsmaterial über den mindestens einen Industrieroboter (14, 14') vorbestimmt sind, wobei
- der wenigstens eine Einteiler der mindestens einen Weiche (5, 7) in einer Strömungsrichtung (SR) der Artikel (2) vorgeordnet ist, so dass Artikelgruppen (8) über die mindestens eine Weiche (5, 7) entgegengenommen werden, oder wobei
- der wenigstens eine Einteiler der mindestens einen Weiche (5, 7) in einer Strömungsrichtung (SR) der Artikel (2) nachgeordnet ist, so dass mittels des wenigstens einen Einteilers Artikelgruppen (8) aus Artikeln (2) ausgebildet werden können, welche Artikel (2) über die mindestens eine Weiche (5, 7) bereits auf Bahnen (B1, B1', B2, B2') mit der Anzahl m verteilt worden sind.

3. Verpackungssystem (1) nach Anspruch 1 oder Anspruch 2, bei dem die mindestens eine Weiche (5, 7) mindestens eine schwenkbare Klappe (12, 13) umfasst oder durch mindestens eine schwenkbare Klappe (12, 13) gebildet ist.

4. Verpackungssystem (1) nach einem der Ansprüche 1 bis 3, bei welchem eine erste Weiche (5) und eine zweite Weiche (7) vorgesehen sind, wobei
- die erste Weiche (5) zur Entgegennahme und zum Verteilen von Artikeln (2) oder Artikelgruppen (8) einer ersten Bahn (B1) der parallel zueinander orientierten Bahnen (B1, B1') ausgebildet ist, deren Anzahl n ist, und wobei
- die zweite Weiche (7) zur Entgegennahme und zum Verteilen von Artikeln (2) oder von Artikelgruppen (8) einer weiteren ersten Bahn (B1') der parallel zueinander orientierten Bahnen (B1, B1') ausgebildet ist, deren Anzahl n ist.

5. Verpackungssystem (1) nach Anspruch 4, umfassend eine Steuerungseinrichtung (7), über welche die erste Weiche (5) und die zweite Weiche (7) derart ansteuerbar sind, dass Artikel (2) oder Artikelgruppen (8) über die erste Weiche (5) und die zweite Weiche (7) jeweils auf mehrere unterschiedliche Bahnen (B1, B1', B2, B2') derart verteilt werden, dass eine über den Zeitverlauf für eine jeweilige erste Bahn (B1, B1') vorgesehene Anzahl an Artikeln (2) oder Artikelgruppen (8) größer ist als eine über den Zeitverlauf für eine jeweilige zweite Bahn (B2, B2') vorgesehene Anzahl an Artikeln (2) oder Artikelgruppen (8).

6. Verpackungssystem (1) nach Anspruch 4 oder Anspruch 5, umfassend eine Steuerungseinrichtung (S), welche zu einer solchen Ansteuerung der ersten Weiche (5) und der zweiten Weiche (7) ausgebildet ist, dass eine Sequenz von jeweils drei aufeinanderfolgenden und über die jeweilige Weiche (5, 7) entgegengenommenen Artikeln (2) oder Artikelgruppen (8) über die jeweilige Weiche (5, 7) auf mehrere unterschiedlichen Bahnen (B1, B1', B2, B2') derart verteilt wird, dass von der Sequenz aus jeweils drei aufeinanderfolgenden Artikeln (2) oder jeweils drei aufeinanderfolgenden Artikelgruppen (8) jeweils zwei Artikel (2) oder jeweils zwei Artikelgruppen (8) einer ersten Bahn (B1, B1') zugeordnet werden und jeweils ein Artikel (2) oder jeweils eine Artikelgruppe (8) einer jeweiligen zweiten Bahn (B2, B2') zugeordnet wird.

7. Verpackungssystem (1) nach Anspruch 6, bei dem die Steuerungseinrichtung (S) zu einer solchen Ansteuerung der ersten Weiche (5) und der zweiten Weiche (7) ausgebildet ist, dass die erste Weiche (5) gegenüber der zweiten Weiche (7) den jeweiligen einen Artikel (2) oder die jeweilige eine Artikelgruppe (8) zeitversetzt auf die zweite Bahn (B2) überführt.

8. Verpackungssystem (1) nach Anspruch 6 oder Anspruch 7, bei dem die Steuerungseinrichtung (S) zu einer solchen Ansteuerung der ersten Weiche (5) und der zweiten Weiche (7) ausgebildet ist, dass der jeweilige über die erste Weiche (5) der zweiten Bahn (B2) zuführte Artikel oder die jeweilige über die erste Weiche (5) der zweiten Bahn (B2) zugeführte Artikelgruppe (8) senkrecht zu ihrer Strömungsrichtung (SR) mit einem über die zweite Weiche (7) der ersten Bahn (B1') zuführten Artikel oder mit einer über die zweite Weiche (7) der ersten Bahn (B1') zuführten Artikelgruppe (8) fluchtet.

9. Verpackungssystem (1) nach einem der Ansprüche 4 bis 8, bei dem auf den mindestens einen Industrieroboter (14, 14') in Strömungsrichtung (SR) eine Führung (4) folgt, welche derart positioniert und ausgebildet ist, dass Artikel (2) oder Artikelgruppen (8), welche über die erste Weiche (5) der zweiten Bahn (B2) zugeführt wurden, mit Artikeln (2) oder Artikelgruppen (8), die über die zweite Weiche (7) der zweiten Bahn (B2') zugeführt wurden, auf eine gemeinsame dritte Bahn (B3) zusammengeführt werden.

10. Verpackungssystem (1) nach einem der Ansprüche 1 bis 9, umfassend wenigstens einen ersten Industrieroboter (14) und wenigstens einen zweiten Industrieroboter (14'), die jeweils zum Aufbringen von Verpackungsmaterial auf Artikel (2) oder auf Artikelgruppen (8) ausgebildet sind und auf gegenüberliegenden Seiten der Horizontalfördereinrichtung (15) angeordnet sind.

11. Verwendung eines Verpackungssystems (1) zum Verpacken von Artikeln (2), bei denen es sich um Getränkebehälter (2') handelt.

12. Verfahren (100) zum Verpacken von Artikeln (2), bei dem Artikel (2) in parallelen Bahnen (B1, B1') mit einer Anzahl an Bahnen n mindestens einer Weiche (5, 7) zugeführt und über die mindestens eine Weiche (5, 7) auf Bahnen (B1, B1', B2, B2') mit einer Anzahl m, die größer als die Anzahl n ausgebildet ist, verteilt werden und über eine Horizontalfördereinrichtung (15) sodann fortbewegt werden, wobei mindestens ein Industrieroboter (14, 14') Verpackungsmaterial auf Artikel (2) aufbringt, während sich die Artikel (2) auf der Horizontalfördereinrichtung (15) befinden.

13. Verfahren (100) nach Anspruch 12, bei dem vor Zuführung der Artikel (2) an die mindestens eine Weiche (5, 7) oder nach Verteilen der Artikel (2) über die mindestens eine Weiche (5, 7) aufeinanderfolgende Artikel über wenigstens einen Einteiler voneinander beabstandet werden, wodurch jeweils mehrere Artikel (2) umfassende Artikelgruppen (8) gebildet werden und wobei der mindestens eine Industrieroboter (14, 14') auf die Artikelgruppen (8) Verpackungsmaterial aufbringt, so dass die Artikel (2) einer jeweiligen Artikelgruppe (8) über das Verpackungsmaterial zu einem Gebinde zusammengefasst sind.

14. Verfahren (100) nach Anspruch 12 oder Anspruch 13, bei dem eine erste Weiche (5) und eine zweite Weiche (7) vorgesehen sind, wobei
- die erste Weiche (5) Artikel oder Artikelgruppen (8) von einer ersten Bahn (B1) der parallel zueinander orientierten Bahnen entgegennimmt, deren Anzahl n ist und wobei die erste Weiche (5) diese entgegengenommenen Artikel (2) oder Artikelgruppen (8) verteilt, indem die erste Weiche (5) Artikel (2) oder Artikelgruppen (9) auf der ersten Bahn (B1) belässt und weitere Artikel oder Artikelgruppen (8) auf eine zweite Bahn (B2) führt, und wobei
- die zweite Weiche (7) Artikel (2) oder Artikelgruppen (8) von einer weiteren ersten Bahn (B1') der parallel zueinander orientierten Bahnen (B1, B1') entgegennimmt, deren Anzahl n ist und wobei die zweite Weiche (7) diese entgegengenommenen Artikel (2) oder Artikelgruppen (8) verteilt, indem die zweite Weiche (7) Artikel (2) oder Artikelgruppen (8) auf der weiteren ersten Bahn (B1') belässt und weitere Artikel (2) oder Artikelgruppen (8) auf eine weitere zweite Bahn (B2') führt.

15. Verfahren (100) nach Anspruch 14, bei dem die erste Weiche (5) und die zweite Weiche (7) der jeweiligen ersten Bahn (B1, B2) eine größere Anzahl an Artikeln (2) oder Artikelgruppen (8) über den Zeitverlauf zuführen als sie der jeweiligen zweiten Bahn (B2, B2') zuführen.

16. Verfahren (100) nach Anspruch 14 oder Anspruch 15, bei dem über die erste Weiche (5) und über die zweite Weiche (7) eine Sequenz von jeweils drei aufeinanderfolgenden und über die jeweilige Weiche (5, 7) entgegengenommenen Artikeln oder Artikelgruppen (8) über die jeweilige Weiche (5, 7) auf mehrere unterschiedliche Bahnen (B1, B1', B2, B2') verteilt wird, wobei von der Sequenz aus jeweils drei aufeinanderfolgenden Artikeln (2) oder jeweils drei aufeinanderfolgenden Artikelgruppen (8) jeweils zwei Artikel (2) oder jeweils zwei Artikelgruppen (8) einer jeweiligen ersten Bahn (B1, B1') auf der jeweiligen ersten Bahn (B1, B1') belassen werden und jeweils ein Artikel (2) oder jeweils eine Artikelgruppe (8) derselben Sequenz einer jeweiligen zweiten Bahn (B2, B2') zugeführt wird.

17. Verfahren (100) nach Anspruch 16, bei dem zunächst die erste Weiche (5) den jeweiligen einen Artikel (2) oder die jeweilige eine Artikelgruppe (8) der jeweiligen Sequenz der jeweiligen zweiten Bahn (B2) zuführt und hierauf folgend die zweite Weiche (7) den jeweiligen einen Artikel (2) oder die jeweilige eine Artikelgruppe (8) der zweiten Bahn (B2) zuführt.

18. Verfahren (100) nach einem der Ansprüche 14 bis 17, bei welchem die erste Weiche (5) und die zweite Weiche (7) Artikel oder Artikelgruppen (8) derart verteilen, dass die über die erste Weiche (5) verteilten Artikel (2) oder Artikelgruppen (8) mit den über die zweite Weiche (7) verteilten Artikeln (2) oder Artikelgruppen (8) senkrecht zur Strömungsrichtung (SR) fluchten.

19. Verfahren nach einem der Ansprüche 14 bis 18, bei dem die den zweiten Bahnen (B2, B2') zugeführten Artikel (2) oder die den zweiten Bahnen zugeführten Artikelgruppen (8) nach Aufbringen des Verpackungsmaterials zusammengeführt und entlang einer dritten Bahn (B3) gemeinsam weiterbewegt werden.

20. Verfahren nach einem der Ansprüche 13 bis 17, bei dem sich auf gegenüberliegenden Seiten der Horizontalfördereinrichtung (15) wenigstens ein erster Industrieroboter (14) und wenigstens ein zweiter Industrieroboter (14') befinden, die jeweils Verpackungsmaterial auf Artikel (2) oder auf Artikelgruppen (8) aufbringen.
